Europäisches Patentamt

European Patent Office

Office européen des brevets

(19)

(11) Veröffentlichungsnummer: **0 130 397**
**B1**

(12) # EUROPÄISCHE PATENTSCHRIFT

(45) Veröffentlichungstag der Patentschrift:
30.03.88

(51) Int. Cl.⁴: **G 06 F 7/50**

(21) Anmeldenummer: **84106357.1**

(22) Anmeldetag: **04.06.84**

(54) **Digitales Rechenwerk.**

(30) Priorität: **30.06.83 DE 3323607**

(43) Veröffentlichungstag der Anmeldung:
**09.01.85 Patentblatt 85/2**

(45) Bekanntmachung des Hinweises auf die Patenterteilung:
**30.03.88 Patentblatt 88/13**

(84) Benannte Vertragsstaaten:
**DE FR GB NL**

(56) Entgegenhaltungen:
**DE - A - 2 647 982**
**US - A - 2 954 168**

**IRE TRANSACTIONS ON ELECTRONIC COMPUTERS,
Band EC-4, Nr. 4, Dezember 1955, Seiten 133-136, New
York, US; B. GILCHRIST et al.: "Fast carry logic for
digital computers"
Hwang: "Computer Arithmetic" 1979 bei John Wiley
and Sons, New York, seiten 80-85**

(73) Patentinhaber: **Siemens Aktiengesellschaft Berlin und
München, Wittelsbacherplatz 2, D-8000 München 2 (DE)**

(72) Erfinder: **Ulbrich, Walter, Dr., Renkenstrasse 36,
D-8039 Puchheim (DE)**
Erfinder: **Rainer, Alois, Dipl.-Ing.,
Annette-Kolb-Anger 11, D-8000 München 83 (DE)**
Erfinder: **Noll, Tobias, Dipl.-Ing.,
Richard-Strauss-Strasse 32, D-8000 München 80 (DE)**

## Beschreibung

Die Erfindung bezieht sich auf ein digitales Rechenwerk nach dem Oberbegriff des Patentanspruchs 1.

Ein Rechenwerk dieser Art ist aus der US-A 2 954 168 bekannt. Hierbei enthält jede Stufe einen ersten und einen zweiten Volladdierer, denen eine erste und zweite Übertragslogikschaltung individuell zugeordnet sind. Innerhalb jeder der Gruppen mit Ausnahme der die niedrigstwertige Stufe enthaltenden Gruppe sind zwei getrennte Übertragspfade vorhanden, von denen der erste alle ersten Übertragslogikschaltungen dieser Gruppe miteinander verbindet, während der zweite über alle zweite Übertragslogikschaltungen dieser Gruppe geführt ist. Dabei wird den ersten Übertragspfaden in den einzelnen Gruppen jeweils in der niedrigstwertigen Stufe derselben ein Übertrag «0» zugeführt, den zweiten Übertragspfaden jeweils ein Übertrag «1». Sämtliche ersten Volladdierer jeder dieser Gruppen bilden ein erstes Rechenergebnis unter Berücksichtigung des dem ersten Übertragspfad zugeführten Übertrags «0», sämtliche zweiten Volladdierer ein zweites Rechenergebnis unter Berücksichtigung des dem zweiten Übertragspfad zugeführten Übertrags «1». Schliesslich wird am Übertragsausgang der niedrigstwertigen Gruppe ein Signal abgegriffen, das über eine Gatterschaltung entweder das erste oder das zweite Rechenergebnis der Gruppe nächsthöherer Wertigkeit an einen gemeinsamen Ausgang des Rechenwerks durchschaltet. Anschliessend wird ein weiteres Übertragssignal am Übertragsausgang derjenigen Volladdierer der letztgenannten Gruppe, die das ausgewählte Rechenergebnis geliefert haben, abgegriffen und dazu benutzt, um über eine weitere Gatterschaltung wieder das erste oder zweite Rechenergebnis der Gruppe nächsthöherer Wertigkeit an den gemeinsamen Ausgang durchzuschalten usw. Die Bearbeitungsgeschwindigkeit bei einem solchen Rechenwerk, das nach dem sog. «Carry-Select»-Prinzip arbeitet, ist zwar grösser als bei einem Rechenwerk mit gleicher Stufenzahl, bei dem das «Carry-Ripple»-Prinzip angewandt wird, doch bedingt die Anordnung zweier Volladdierer in jeder Stufe einen relativ grossen Schaltungsaufwand.

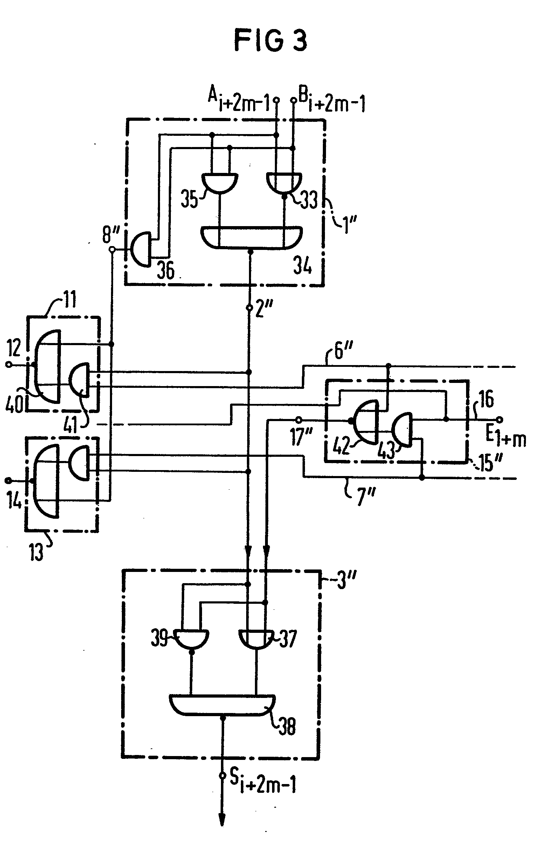

Ein anderes Rechenwerk, das ebenfalls nach dem «Carry-Select»-Prinzip arbeitet, ist im Buch von Hwang «Computer Arithmetic», erschienen 1979 im Verlag John Wiley & Sons, New York, auf den Seiten 81–84, vgl. insbesondere Fig. 3.7, beschrieben. Auch bei diesem Rechenwerk sind in jeder einzelnen Stufe zwei Volladdierer vorgesehen, so dass auch hier der Schaltungsaufwand relativ gross ist.

Ein Rechenwerk, das zur Erhöhung der Verarbeitungsgeschwindigkeit nach dem «Carry-Look-Ahead»-Prinzip arbeitet, ist in dem Buch «Microprocessors/Microcomputers» von D.D. Givone und R.P. Roesser, McGraw-Hill Book Company, New York 1980, S. 166–172, beschrieben. Die N Stufen eines Addierers werden dabei vorzugsweise zu jeweils K-stelligen Gruppen zusammengefasst, wobei den niedrigstwertigen Stufen aller Gruppen vorausberechnete Überträge parallel zugeführt werden, die in einem Übertragsgenerator aus dem Eingangsübertrag des Addierers und den zu addierenden Bits gebildet werden. Die Überträge zwischen den einzelnen Stufen einer Gruppe werden dann im allgemeinen in den Stufen selbst gebildet. Der Übertragsgenerator erfordert jedoch einen beträchtlichen Schaltungsaufwand, der mit der angestrebten Verarbeitungsgeschwindigkeit und der Verarbeitungsbreite des Addierers stark ansteigt. Mit diesen Massnahmen sind auch eine Vergrösserung der Verlustleistung und eine Vergrösserung der Schaltungskapazitäten verbunden.

Der Erfindung liegt die Aufgabe zugrunde, ein Rechenwerk der eingangs genannten Art anzugeben, bei dem eine Verkürzung der Verarbeitungszeit mit einem wesentlich kleineren Schaltungsmehraufwand erzielbar ist, als das bei einem nach dem «Carry-Select»-Prinzip oder «Carry-Look-Ahead»-Prinzip arbeitenden Rechenwerk der Fall ist. Das wird erfindungsgemäss durch eine Ausbildung des Rechenwerks nach den im kennzeichnenden Teil des Anspruchs 1 aufgeführten Merkmalen erreicht.

Der mit der Erfindung erzielbare Vorteil besteht insbesondere darin, dass der für die Verarbeitungszeitverkürzung erforderliche Mehraufwand im Vergleich zu einem «Carry-Ripple-Adder», der aus einem Volladdierer und einer Übertragslogikschaltung pro Stufe besteht, im wesentlichen nur aus einem zusätzlichen Übertragspfad pro Gruppe, d.h. aus einer zusätzlichen Übertragslogikschaltung pro Stufe, sowie aus einer zusätzlichen Auswahllogikschaltung pro Stufe besteht.

Die Ansprüche 2 bis 7 betreffen vorteilhafte Ausgestaltungen und Weiterbildungen der Erfindung.

Die Erfindung wird nachfolgend anhand der Zeichnung näher erläutert.

Dabei zeigt:
Fig. 1 das Blockschaltbild eines mehrstufigen, nach der Erfindung ausgebildeten Rechenwerks,
Fig. 2 das Blockschaltbild einer weiteren Anzahl von Stufen, die den in Fig. 1 dargestellten Stufen vorgeschaltet werden, und
Fig. 3 eine schaltungstechnische Durchbildung einer Stufe des Rechenwerks nach Figur 1.

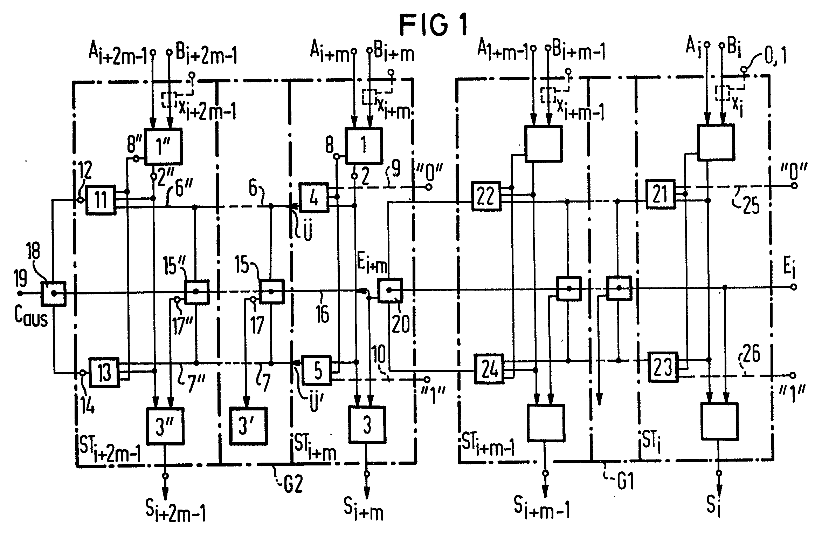

In Fig. 1 ist ein aus 2m Stufen bestehendes digitales Rechenwerk in der Form eines Addierwerks dargestellt, das eine parallele Addition von zwei jeweils 2m-stelligen dualen Zahlen A und B durchführt. Dabei sind m Stufen $ST_i$ bis $ST_{i+m-1}$ zu einer ersten Gruppe G1 zusammengefasst, während weitere m Stufen $ST_{i+m}$ bis $ST_{i+2m-1}$ eine zweite Gruppe G2 bilden. Jede Stufe, z.B. $ST_{i+m}$, besteht aus einem Volladdierer, der zwei Bits, z.B. $A_{i+m}$ und $B_{i+m}$, der Zahlen A und B unter Berücksichtigung des von der vorhergehenden Stufe zugeführten Übertrags zu einer Summe, z.B.

$S_{i+m}$, addiert und gleichzeitig zwei Überträge bildet, die der benachbarten, höherwertigen Stufe zugeführt werden.

Die Stufe $ST_{i+m}$ weist im einzelnen einen ersten Halbaddierer 1 auf, dessen Eingänge mit den Bits $A_{i+m}$ und $B_{i+m}$ beschaltet sind. Eine am Ausgang 2 von 1 abgreifbare Zwischensumme wird dem ersten Eingang eines zweiten Halbaddierers 3 zugeführt, an dessen zweitem Eingang ein Übertrag $E_{i+m}$ von der benachbarten Stufe $ST_{i+m-1}$ niedrigerer Wertigkeit liegt. Im Halbaddierer 3 wird aus dem Übertrag $E_{i+m}$ und der genannten Zwischensumme eine dem Stellenwert $i + m$ zugeordnete Summe $S_{i+m}$ gebildet. Die von sämtlichen Stufen abgegebenen Summen $S_i$ bis $S_{i+2m-1}$ stellen das 2m-stellige Additionsergebnis dar, wobei der eingangsseitige Übertrag an der Stufe $ST_i$ mit $E_i$ und der ausgangsseitige Übertrag der Stufe $ST_{i+2m-1}$ mit $C_{aus}$ bezeichnet sind.

In der Stufe $ST_{i+m}$ werden mittels zweier Übertragslogikschaltungen 4 und 5 zwei getrennte Überträge Ü und Ü' gebildet, die den entsprechenden Übertragslogikschaltungen der benachbarten Stufe $ST_{i+m+1}$ höherer Wertigkeit über Leitungen 6 und 7 zugeführt werden. Dabei sind einander entsprechende, erste Eingänge der Schaltungen 4 und 5 mit dem Ausgang 8 des Halbaddierers 1 verbunden, an dem der in diesem gebildete Übertrag erscheint. Zweite Eingänge der Schaltungen 4 und 5, die ebenfalls einander entsprechen, sind mit dem Ausgang 2 des Halbaddierers 1 verbunden. Die Übertragslogikschaltung 4 ist weiterhin so ausgebildet, dass bei der Bildung des Übertrags Ü ein fiktiver Übertrag «0» berücksichtigt wird, den man sich von der Stufe $ST_{i+m-1}$ her zugeführt denken kann. Dies wird in Figur 1 durch eine mit einer «0» belegte, gestrichelte Leitung 9 angedeutet, die an einen weiteren Eingang der Schaltung 4 geführt ist. Zum Unterschied hiervon ist die Übertragslogikschaltung 5 so ausgebildet, dass sie bei der Bildung des Übertrags Ü' einen fiktiven Übertrag «1» berücksichtigt, den man sich von der Stufe $ST_{i+m-1}$ her zugeführt denken kann, was in Figur 1 durch eine mit einer «1» belegte, gestrichelte Leitung 10 angedeutet wird, die mit einem weiteren Eingang der Schaltung 5 verbunden ist.

Die übrigen in Figur 1 dargestellten Stufen der Gruppe G2 sind analog zu $ST_{i+m}$ ausgebildet. Dabei stellt die Übertragslogikschaltung 4 mit den entsprechenden Übertragslogikschaltungen der höherwertigen Stufen einschliesslich der Übertragslogikschaltung 11 der Stufe $ST_{i+2m-1}$ und mit den diese untereinander verbindenden Leitungen, z.B. 6, einen ersten Übertragspfad der Gruppe G2 dar, dessen Ausgang 12 mit dem Ausgang von 11 zusammenfällt. Die Übertragslogikschaltung 5 bildet andererseits mit den entsprechenden Übertragslogikschaltungen der höherwertigen Stufen einschliesslich der Übertragslogikschaltung 13 der Stufe $ST_{i+2m-1}$ und mit den diese untereinander verbindenden Leitungen, z.B. 7, einen zweiten Übertragspfad der Gruppe G2, dessen Ausgang 14 mit dem Ausgang von 13 zusammenfällt.

Den Übertragslogikschaltungen 4 und 5 der Stufe $ST_{i+m}$ ist eine Auswahllogikschaltung 15 zugeordnet, die mit drei Eingängen versehen ist. Von diesen sind die ersten beiden jeweils mit den Ausgängen der Schaltungen 4 und 5 verbunden, während der dritte mit einer Auswahlleitung 16 beschaltet ist. Ein Ausgang 17 ist mit dem Übertragseingang des zweiten in Fig. 1 mit 3' angedeuteten Halbaddierers der Stufe $ST_{i+m+1}$ verbunden, der dem Halbaddierer 3 entspricht. Ganz allgemein ist den beiden Übertragslogikschaltungen jeder Stufe eine Auswahllogikschaltung in der beschriebenen Weise zugeordnet, wobei deren Ausgang jeweils an den Übertragseingang des zweiten Halbaddierers der benachbarten, höherwertigen Stufe geführt ist. Am Ausgang 19 der den Übertragslogikschaltungen 11 und 13 zugeordneten Auswahllogikschaltung 18 wird der Übertrag $C_{aus}$ abgegriffen.

Alle den Stufen $ST_{i+m}$ bis $ST_{i+2m-1}$ zugeordneten Auswahllogikschaltungen 15 ... 18 werden über die Auswahlleitung 16 gemeinsam angesteuert, wobei die Steuerung in Abhängigkeit von dem Übertrag $E_{i+m}$ erfolgt, der der Stufe $ST_{i+m}$ von der benachbarten, niedrigerwertigen Stufe her zugeführt wird. Somit stellt der Übertrag $E_{i+m}$ gleichzeitig ein der Auswahlleitung 16 mitgeteiltes Steuersignal dar. Durch einen Übertrag $E_{i+m}$ = 0 werden alle Auswahllogikschaltungen von G2 in einen ersten Schaltzustand gesteuert, in dem sie jeweils die Übertragslogikschaltungen des ersten Übertragspfades auf die Übertragseingänge der zweiten Halbaddierer der benachbarten, höherwertigen Stufen bzw. (im Falle der Schaltung 18) den Ausgang 12 auf den Ausgang 19 der Gruppe G2 durchschalten. Beim Auftreten eines Übertrags $E_{i+m}$ = 1 gelangen die Auswahllogikschaltungen der Gruppe G2 in einen zweiten Schaltzustand, in dem sie jeweils die Übertragslogikschaltungen des zweiten Übertragspfades auf die Übertragseingänge der zweiten Halbaddierer der benachbarten, höherwertigen Stufen bzw. (im Falle der Schaltung 18) den Ausgang 14 auf den Ausgang 19 der Gruppe G2 durchschalten.

Die Gruppe G1 mit den Stufen $ST_i$ bis $ST_{i+m-1}$ ist im wesentlichen analog zu G2 aufgebaut. Es besteht lediglich der Unterschied, dass der niedrigstwertigen Stufe $ST_i$ ein eingangsseitiger Übertrag $E_i$ direkt, d.h. nicht über eine Auswahllogikschaltung, zugeführt wird, während die entsprechende Stufe $ST_{i+m}$ von G2 den eingangsseitigen Übertrag $E_{i+m}$ über eine Auswahllogikschaltung 20 zugeführt erhält, die der höchstwertigen Stufe $ST_{i+m-1}$ von G1 zugeordnet ist. Auch in G1 sind ein erster Übertragspfad, der die Übertragslogikschaltungen 21 ... 22 umfasst, und ein zweiter Übertragspfad mit den Übertragslogikschaltungen 23 ... 24 vorgesehen, wobei in der Schaltung 21 ein fiktiver, eingangsseitiger Übertrag «0» berücksichtigt ist, was durch die gestrichelte Leitung 25 angedeutet wird, während in der Schaltung 23 ein fiktiver, eingangsseitiger Übertrag «1» berücksichtigt ist, was durch eine gestrichelte Leitung 26 verdeutlicht wird.

Im Betrieb addiert die Gruppe G1 die einzelnen ihr zugeführten Bits der Zahlen A und B, während gleichzeitig die Gruppe G2 die einzelnen ihr zugeführten Bits von A und B in entsprechender Weise verarbeitet. In den insgesamt vier Übertragspfaden der Gruppen G1 und G2 finden gleichzeitige Übertragsdurchläufe statt, und zwar von den jeweils niedrigstwertigen zu den höchstwertigen Stufen, wobei die in den Schaltungen 4 und 21 gebildeten Überträge jeweils einen fiktiven, eingangsseitigen Übertrag «0» berücksichtigen, während die in den Schaltungen 5 und 23 gebildeten Überträge jeweils von einem fiktiven, eingangsseitigen Übertrag «1» ausgehen. Die innerhalb der einzelnen Übertragspfade gebildeten Überträge ergeben sich im übrigen aus den den einzelnen Stufen zugeführten Bits jeweils im Sinne eines normalen Übertragsdurchlaufes.

Nach Beendigung dieser vier Übertragsdurchläufe stehen Überträge an den Ausgängen sämtlicher Übertragslogikschaltungen einschliesslich der Schaltungen 22, 24, 11 und 13 zur Verfügung. Anschliessend wird der niedrigstwertigen Stufe $ST_i$ der tatsächliche eingangsseitige Übertrag $E_i$ zugeführt, durch den innerhalb der Gruppe G1 entweder alle Übertragslogikschaltungen 21 ... 22 des ersten Übertragspfades (bei $E_i = 0$) oder alle Übertragslogikschaltungen 23 ... 24 des zweiten Übertragspfades (bei $E_i = 1$) an die Ausgänge der ihnen zugeordneten Auswahllogikschaltungen durchgeschaltet werden, so dass die Übertragseingänge der zweiten Halbaddierer der einzelnen Stufen mit den Überträgen des ersten bzw. zweiten Übertragspfades beaufschlagt werden. Entsprechend dem von der Auswahllogikschaltung 20 eingenommenen Schaltzustand wird der Übertrag $E_{i+m}$ aus den beiden in den Schaltungen 22 und 24 gebildeten Überträgen selektiert und der gemeinsamen Ansteuerleitung 16 zugeführt, wodurch sämtliche Auswahllogikschaltungen 15 ... 18 der zweiten Gruppe G2 entweder alle Übertragslogikschaltungen 4 ... 11 des ersten Übertragspfades (bei $E_{i+m} = 0$) oder alle Übertragslogikschaltungen 5 ... 13 des zweiten Übertragspfades (bei $E_{i+m} = 1$) an die Ausgänge der ihnen zugeordneten Auswahllogikschaltungen durchschalten. Dabei werden wieder die Übertragseingänge der zweiten Halbaddierer der einzelnen Stufen mit den jeweils im ersten bzw. zweiten Übertragspfad von G2 gebildeten Überträgen beaufschlagt. Durch die gruppenweise Selektion der Überträge aus den jeweils ersten oder zweiten Übertragspfaden ergeben sich für die zweiten Halbaddierer der einzelnen Stufen die benötigten Überträge, so dass die Summen $S_i$ bis $S_{i+2m-1}$ gebildet werden können, die das Additionsergebnis darstellen. Gleichzeitig steht auch der Übertrag $C_{aus}$ am Ausgang 19 zur Verfügung.

Die Additionszeit T eines Addierwerks nach Figur 1 setzt sich zusammen aus einem ersten Anteil t1, der der Additionszeit einer m-stufigen Gruppe, z.B. G1, entspricht, einem zweiten Anteil t2, der die Umschaltzeit der Auswahllogikschaltung 20 angibt und aus einem dritten Anteil t3, der aus der Durchlaufzeit der Auswahllogikschaltung 18 besteht. Dabei gilt die Beziehung T = t1 + t2 + t3. Da t1 trotz der insgesamt 2m Stufen nur auf eine einzige m-stufige Gruppe bezogen ist, ergibt sich eine wesentlich kürzere Additionszeit T als das bei einem herkömmlichen Addiererkonzept mit einem einzigen Übertragsdurchlauf über alle 2m Stufen der Fall wäre.

Werden in Figur 1 weitere Gruppen G3 bis GK vorgesehen, die jeweils entsprechend G2 aufgebaut sind, so vergrössert sich die Additionszeit T nur insoweit, als der Anteil t2 mit dem Faktor (K-1) zu multiplizieren ist. Die Anteile t1 und t3 bleiben dabei unverändert. D.h., dass bei einer grösseren Wortbreite K m der zu addierenden Zahlen A und B eine wesentlich grössere Steigerung der Arbeitsgeschwindigkeit gegenüber dem herkömmlichen Addiererkonzept mit einem einzigen Übertragsdurchlauf über alle K m Stufen erzielt wird.

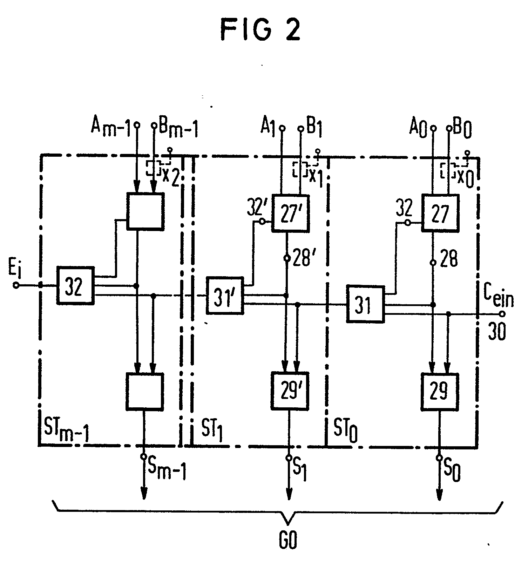

Nach einer Weiterbildung der Erfindung ist es zweckmässig, die Gruppe, die die niedrigstwertige Stufe enthält, einfacher auszubilden als G1 in Figur 1. Zur Erläuterung dieser Weiterbildung dient die Figur 2, die eine solche vereinfachte, niedrigstwertige Gruppe G0 zeigt. Hierbei wird davon ausgegangen, dass G0 der Gruppe G1 von Figur 1 vorgeschaltet wird und die niedrigstwertige Stufe des Addierwerks nicht mehr aus der Stufe $ST_i$ besteht, sondern aus der Stufe $ST_0$, die die erste Stufe der insgesamt m Stufen umfassenden Gruppe G0 darstellt. Wie Figur 2 zeigt, sind die einzelnen Stufen von G0 untereinander gleichartig aufgebaut. Sie weisen jeweils einen ersten Halbaddierer, z.B. 27, auf, dessen Eingänge mit zugeordneten Bits, z.B. $A_0$ und $B_0$, der dualen Zahlen A und B belegt sind. Eine bei 28 abgreifbare Zwischensumme wird einem zweiten Halbaddierer 29 zugeführt, wobei diesem auch ein eingangsseitiger Übertrag mitgeteilt wird. Im Falle der Stufe $ST_0$ ist dieser Übertrag, der über einen Anschluss 30 zugeführt wird, mit $C_{ein}$ bezeichnet. Eine Übertragslogikschaltung 31, deren Eingänge mit dem Übertragsausgang 32 des Halbaddierers 27, dem Ausgang 28 und dem Anschluss 30 verbunden sind, bildet den Übertrag der Stufe $ST_0$ und führt diesen sowohl der Übertragslogikschaltung 31' als auch dem zweiten Halbaddierer 29' der nachfolgenden Stufe $ST_s$ der Gruppe G0 zu. Die übrigen Teilschaltungen der Stufe $ST_1$ sind mit den gleichen Bezugszeichen versehen wie die entsprechenden Teilschaltungen von $ST_0$, wobei lediglich Striche hinzugefügt wurden. Die Übertragslogikschaltung 32 der Stufe $ST_{m-1}$ bildet den Übertrag $E_i$, der der Stufe $ST_i$ von Figur 1 mitgeteilt wird.

Die Übertragslogikschaltung 31 ... 32 bilden mit den sie untereinander verbindenden Leitungen einen einzigen Übertragspfad, im Gegensatz zu den doppelten Übertragspfaden der jeweils verwendeten Gruppen G1 bis GK. An den Summenausgängen der Stufen $ST_0$ bis $ST_{m-1}$ sind den einzelnen Stellen der Gruppe G0 zugeordneten Teilsummen $S_0$ bis $S_{m-1}$ abgreifbar. Da die Additionszeit der Gruppe G0 den Additionszeiten der übrigen Gruppen entspricht und mit diesen zusammenfällt, wird die Additionszeit des Addierwerks, das aus den Stufen G1 und G2 oder aus G1 bis GK besteht, durch Hinzufügung von G0 nicht vergrössert. Besteht es unter Weglassung von G2 lediglich aus den Stufen G1 und G0, so reduziert sich die Additionszeit T auf den Wert $t1 + t3$, wobei t3 die Umschaltzeit der Schaltung 20 bedeutet.

Bei einer Ausführung des Addierwerks mit den Gruppen G1 bis GK ist es zweckmässig, eine oder mehrere der höherwertigen Gruppen, z.B. GK, mit einer grösseren Stufenanzahl zu versehen als die niedrigerwertigen Gruppen, z.B. G1. Diese Erhöhung der Stufenzahl ist zulässig, weil die Durchschaltung der jeweils den höchstwertigen Stufen der einzelnen Gruppen zugeordneten Auswahllogikschaltungen sequentiell erfolgt und die hierfür benötigte Zeitspanne für sämtliche Gruppen bis einschliesslich der Gruppe G(K-1) beispielsweise (K-2)t2 beträgt. Damit kann aber die Additionszeit für die Gruppe GK um diese Zeitspanne erhöht werden, oder mit anderen Worten die Stufenzahl für GK entsprechend vermehrt werden. Durch eine solche Massnahme wird bei einer vorgegebenen Stufenzahl N des Addierwerks die Anzahl K der Gruppen reduziert, was eine weitere Verringerung der Additionszeit T bedeutet.

Das erfindungsgemässe Schaltungskonzept erlaubt eine deutliche Erhöhung der Arbeitsgeschwindigkeit eines Addierwerkes, sofern die Gesamtstufenzahl desselben über 8 bis 10 liegt.

Figur 3 zeigt eine bevorzugte Ausführungsform der Stufe $ST_{i+2m-1}$ des Addierwerks nach Figur 1, wobei die übrigen Stufen zweckmässigerweise entsprechend ausgebildet sind. Lediglich die niedrigstwertigen Stufen der einzelnen Gruppen zeigen geringfügige Abweichungen hiervon im Bereich der dargestellten Auswahllogikschaltung, die aber der Figur 1 entnehmbar sind.

Im einzelnen besteht der erste Halbaddierer 1″ der Stufe $ST_{i+2m-1}$ aus einem eingangsseitigen NOR-Glied 33, dessen Eingänge mit den zu addierenden Bits $A_{i+2m-1}$ und $B_{i+2m-1}$ belegt sind. Der Ausgang desselben ist mit dem ersten Eingang eines zweiten NOR-Gliedes 34 verbunden, dessen Ausgang den Ausgang 2″ des Halbaddierers darstellt. Der zweite Eingang von 34 ist mit dem Ausgang des UND-Gliedes 35 beschaltet, dessen Eingänge den Eingängen von 33 parallel geschaltet sind. Weiterhin ist ein UND-Glied 36 vorgesehen, dessen Eingänge den Eingängen von 33 ebenfalls parallel geschaltet sind und dessen Ausgang den Übertragsausgang 8″ bildet. Der zweite Halbaddierer 3″ ist mit einem ODER-Glied 37 versehen, dessen Eingänge mit den Ausgängen 2″ von 1″ und 17″ von der Auswahllogikschaltung 15″ der Stufe $ST_{i+2m-2}$ beschaltet sind, und dessen Ausgang an den ersten Eingang eines NAND-Gliedes 38 geführt ist. Der zweite Eingang von 38 ist dann mit dem Ausgang eines NAND-Gliedes 39 verbunden, dessen Eingänge den Eingängen von 37 parallel geschaltet sind. Der Ausgang von 38 stellt den Summenausgang der Stufe $ST_{i+2m-1}$ dar.

Die Übertragslogikschaltung 11 besteht aus einem NOR-Glied 40, dessen erster Eingang mit dem Ausgang 8″ verbunden ist und dessen zweiter Eingang dem Ausgang eines UND-Gliedes 41 nachgeschaltet ist, dessen Eingänge mit dem Ausgang 2″ und der Leitung 6″ beschaltet ist. Dabei verbindet 6″ die im ersten Übertragspfad der Gruppe G2 liegenden Übertragslogikschaltungen der Stufen $ST_{i+2m-2}$ und $ST_{i+2m-1}$. Der Ausgang von 40 bildet den Ausgang 12 der Schaltung 11. Einen entsprechenden Aufbau weist die Übertragslogikschaltung 13 auf, wobei lediglich an die Stelle der Leitung 6″ die Leitung 7″ tritt, die die im zweiten Übertragspfad der Gruppe G2 liegenden Übertragslogikschaltungen der Stufen $ST_{i+2m-2}$ und $ST_{i+2m-1}$ verbindet, und an die Stelle des Ausgangs 12 der Ausgang 14.

Die Auswahllogikschaltung 15″ besteht aus einem NOR-Glied 42, dessen erster Eingang mit dem Ausgang eines UND-Gliedes 43 verbunden ist, dessen beide Eingänge jeweils mit der Ansteuerleitung 16 und der Leitung 7″ verbunden sind. Der zweite Eingang von 42 ist mit der Leitung 6″ beschaltet, während der Ausgang von 42 den Ausgang 17″ der Schaltung 15″ bildet.

Die anhand von Fig. 3 erläuterten Schaltungsteile sind, soweit sie in Fig. 1 enthalten sind, dort mit denselben Bezugszeichen versehen.

Das vorstehend beschriebene Rechenwerk kann auch zur Subtraktion A minus B der in Zweierkomplement-Darstellung vorliegenden binären Zahlen A, B benutzt werden, indem sämtliche Bits $B_i$ invertiert zugeführt werden und der der niedrigstwertigen Stufe zugeführte Übertrag $E_i$ oder $C_{ein}$ aus einer «1» besteht. Wird eine Umschaltung Addierer/Subtrahierer gewünscht, werden die Bits $B_i$ an die ersten Eingänge von EXOR-Gliedern $X_0$ bis $X_{i+2m-1}$ gelegt, deren zweiten Eingängen jeweils das Signal «0» (für die Addition) oder «1» (für die Subtraktion) zugeführt wird. Die Ausgänge von $X_0$ bis $X_{i+2m-1}$ sind dabei an die für B vorgesehenen Eingänge der ersten Halbaddierer, z.B. 1, 27 oder 27′, gelegt. Die EXOR-Glieder können dabei entsprechend dem Block 3″ in Fig. 3 ausgebildet sein.

**Patentansprüche**

1. Digitales Rechenwerk, bestehend aus einer Mehrzahl von Stufen ($ST_{i+m}$), die jeweils zwei zu einem Volladdierer zusammengefasste Halbaddierer (1, 3) und wenigstens eine Übertragslogikschaltung (4) aufweisen, welche einen der jeweils benachbarten, höherwertigen Stufe zuzuführenden Übertrag bildet, bei dem die Stufen in wenigstens zwei Gruppen (G1, G2) aufgeteilt sind und bei dem innerhalb wenigstens einer Gruppe (G2) zwei getrennte, sich über alle Stufen derselben erstreckende, in jeder Stufe jeweils eine Übertragslogikschaltung (4, 5, 11, 13) enthaltende Übertragspfade vorgesehen sind, von denen der erste (4 ... 11) so ausgebildet ist, dass er einen der niedrigstwertigen Stufe ($St_{i+m}$) der Gruppe (G2) zugeführten, vorgegebenen Übertrag «0» berücksichtigt, während der zweite (5 ... 13) so ausgebildet ist, dass er einen entsprechenden vorgegebenen Übertrag «1» berücksichtigt, dadurch gekennzeichnet, dass beide Übertragslogikschaltungen (4, 5) jeder Stufe über eine zugeordnete Auswahllogikschaltung (15) mit dem einen Halbaddierer (3') der jeweils benachbarten, höherwertigen Stufe ($ST_{i+m+1}$) verbunden sind und dass innerhalb einer Gruppe (G2) sämtliche dieser zugeordneten Auswahllogikschaltungen (15 ... 18) über eine gemeinsame Auswahlleitung (16) ansteuerbar sind.

2. Digitales Rechenwerk nach Anspruch 1, dadurch gekennzeichnet, dass die im ersten und zweiten Übertragspfad angeordneten Übertragslogikschaltungen jeweils einen der benachbarten, höherwertigen Stufe über den betreffenden Übertragspfad zuzuführenden Übertrag bilden, wobei jede der im ersten bzw. zweiten Übertragspfad liegenden Übertragslogikschaltungen den Übertrag in Abhängigkeit von dem ihr über den ersten bzw. zweiten Übertragspfad zugeführten Übertrag aus der benachbarten, niedrigerwertigen Stufe bildet.

3. Digitales Rechenwerk nach einem der Ansprüche 1 oder 2, dadurch gekennzeichnet, dass beide in einer Stufe ($ST_{i+2m-1}$) vorgesehenen Übertragslogikschaltungen (11, 13) über erste Eingänge zueinander parallel geschaltet und jeweils mit dem Übertrags- und Summenausgang (8'', 2'') des einen Halbaddierers (1'') verbunden sind und dass sie über weitere Eingänge mit den beiden Übertragspfaden (6'', 7'') der zugehörigen Gruppe (G2) in individueller Zuordnung beschaltet sind.

4. Digitales Rechenwerk nach einem der Ansprüche 1 bis 3, dadurch gekennzeichnet, dass die gemeinsame Auswahlleitung (16) einer Gruppe (G2) mit dem für den Übertrag vorgesehenen Eingang des einen Halbaddierers (3) der niedrigstwertigen Stufe ($ST_{i+m}$) dieser Gruppe verbunden ist.

5. Digitales Rechenwerk nach einem der Ansprüche 1 bis 4, dadurch gekennzeichnet, dass sämtliche einer Gruppe zugeordneten Auswahllogikschaltungen (15 ... 18) in einem ersten Schaltzustand nur die Übertragslogikschaltungen (4 ... 11) des ersten Übertragspfades mit den Halbaddierern der jeweils benachbarten, höherwertigen Stufen verbinden und in einem zweiten Schaltzustand nur die Übertragslogikschaltungen (5 ... 13) des zweiten Übertragspfades mit den vorstehend genannten Halbaddierern verbinden, wobei der erste Schaltzustand bei Zuführung eines Übertrags «0» und der zweite Schaltzustand bei Zuführung eines Übertrags «1» an die niedrigstwertige Stufe ($ST_{i+m}$) der Gruppe (G2) vorliegen.

6. Digitales Rechenwerk nach Anspruch 5, dadurch gekennzeichnet, dass die Auswahllogikschaltung (15'') ein UND-Glied (43), dessen Eingänge mit der Auswahlleitung (16) und dem zweiten Übertragspfad (7'') beschaltet sind, und ein ausgangsseitiges NOR-Glied (42) enthält, dessen Eingänge mit dem ersten Übertragspfad (6'') und dem Ausgang des UND-Gliedes (43) verbunden sind.

7. Digitales Rechenwerk nach einem der vorhergehenden Ansprüche, dadurch gekennzeichnet, dass wenigstens eine Gruppe, die aus höherwertigen Stufen zusammengesetzt ist, eine grössere Anzahl von Stufen aufweist als eine oder mehrere Gruppen, die aus niedrigerwertigen Stufen zusammengesetzt sind.

8. Digitales Rechenwerk nach einem der Ansprüche 1 bis 7, dadurch gekennzeichnet, dass zur Durchführung einer Subtraktion A minus B zweier in Zweierkomplement-Darstellung vorliegender binärer Zahlen A, B die Bits $A_i$ den ersten Eingängen der ersten Halbaddierer der einzelnen Stufen ($ST_i$) zugeführt werden und die Bits $B_i$ den zweiten Eingängen der ersten Halbaddierer invertiert zugeführt werden, wobei die niedrigstwertige Stufe mit dem eingangsseitigen Übertrag «1» beaufschlagt ist.

9. Digitales Rechenwerk nach einem der Ansprüche 1 bis 7, dadurch gekennzeichnet, dass den einen Eingängen der ersten Halbaddierer der einzelnen Stufen ($ST_i$) jeweils ein EXOR-Glied vorgeschaltet ist, wobei die ersten Eingänge der EXOR-Glieder jeweils mit den Bits einer binären Zahl B beaufschlagt sind, die anderen Eingänge der ersten Halbaddierer mit den Bits einer zweiten binären Zahl A beschaltet sind und die zweiten Eingänge der EXOR-Glieder zur Durchführung einer Addition von A und B mit einer «0» und zur Durchführung einer Subtraktion A minus B mit einer «1» beschaltet sind.

**Claims**

1. Digital computing apparatus, composed of a plurality of stages ($ST_{i+m}$), each of which comprise two half-adders (1, 3), combined to form a full-adder, and at least one carry logic circuit (4) which forms a carry which is to be supplied to the respective adjacent, higher-value stage, where the stages are divided into at least two groups (G1, G2) and where, within at least one group (G2), two separate carry paths are provided which extend across all the stages thereof and which each include a carry logic circuit (4, 5, 11, 13) in each stage, and of which the first (4 ... 11) is designed in such manner that it takes into account a predetermined «0» carry which is supplied to the lowest-value stage ($ST_{i+m}$) of the group (G2), whilst the second (5 ... 13) is designed in such manner that it takes into account a corresponding, predetermined «1» carry, characterised in that the two carry logic circuits (4, 5) of each stage are connected via an assigned selection logic circuit (15) to the first half-adder (3') of the respective adjacent, higher-value stage ($ST_{i+m+1}$), and that within a group (G2) all the assigned selection logic circuits (15 ... 18) can be driven via a common selection line (16).

2. Digital computing apparatus as claimed in claim 1, characterised in that carry logic circuits arranged in the first and second carry paths each form a carry which is to be supplied to the adjacent, higher-value stage via the respective carry path, where each of the carry logic circuits included in the first or second carry paths forms the carry in dependence upon the carry from the adjacent, lower-value stage, with which it is supplied via the first or second carry paths respectively.

3. Digital computing apparatus as claimed in one of the claims 1 or 2, characterised in that both the carry logic circuits (11, 13) included in a stage $(ST_{i+2m-1})$ are connected in parallel with one another via first inputs, and are each connected to the carry- and sum output (8″, 2″) of the first half-adder (1″), and that they are connected via further inputs to the two carry paths (6″, 7″) of the associated group (G2) in individual assignment.

4. Digital computing apparatus as claimed in one of the claims 1 to 3, characterised in that the common selection line (16) of a group (G2) is connected to the input, provided for this carry, of the first half-adder (3) of the lowest-value stage $(ST_{i+m})$ of this group.

5. Digital computing apparatus as claimed in one of the claims 1 to 4, characterised in that in a first switching state all the selection logic circuits (15 ... 18) assigned to a group connect only the carry logic circuits (4 ... 11) of the first carry path to the half-adders of the respective adjacent, higher-value stages, and in a second switching state connect only the carry logic circuits (5 ... 13) of the second carry path to the above-mentioned half-adders, where the first switching state prevails when a «0» carry is supplied to the lowest-value stage $(ST_{i+m})$ of the group (G2), whilst the second switching state prevails when a «1» carry is supplied.

6. Digital computing apparatus as claimed in claim 5, characterised in that the selection logic circuits (15″) include an AND-gate (43), whose inputs are connected to the selection line (16) and to the second carry path (7″), and an output-end NOR-gate (42) whose inputs are connected to the first carry path (6″) and to the ouput of the AND-gate (43).

7. Digital computing apparatus as claimed in one of the preceding claims, characterised in that at least one group, which is assembled from higher-value stages, comprises a larger number of stages than one or more than one group assembled from lower-stages.

8. Digital computing apparatus as claimed in one of the claims 1 to 7, characterised in that in order to carry out an A minus B subtraction of two binary numbers, A, B represented in two's complements, the bits $A_i$ are supplied to the first inputs of the first half-adders of the individual stages $(ST_i)$, and the bits $B_i$ are supplied to the second inputs of the first half-adders in inverted form, where the lowest-value stage is supplied with the input-end «1» carry.

9. Digital computing apparatus as claimed in one of the claims 1 to 7, characterised in that the first inputs of the first adders of the individual stages $(ST_i)$ are each precedes by an EXOR-gate, where the first inputs of the EXOR-gate are each supplied with the bits of a binary number B, the other inputs of the first half-adders are supplied with the bits of a second binary number A, and the second inputs of the EXOR-gates are supplied with a «0» in order to carry out an addition of A and B and with a «1» in order to carry out a subtraction A minus B.

## Revendications

1. Unité de calcul numérique, constituée par une multiplicité d'étages $(ST_{i+m})$, qui comportent chacun deux demi-additionneurs (1, 3) réunis pour former un additionneur complet et au moins un circuit logique de report (4), qui forme un report devant être envoyé à l'étage respectivement voisin de rang supérieur, et dans laquelle les étages sont répartis en au moins deux groupes (G1, G2) et il est prévu, à l'intérieur d'au moins un groupe (G2), deux voies séparées de transmission de reports, qui s'étendent sur tous les étages de ces groupes et contiennent, dans chaque étage, respectivement un circuit logique de report (4, 5, 11, 13) et dont la première (4 ... 11) est agencée de telle sorte qu'elle tient compte d'un report prédéterminé «0» envoyé à l'étage $(ST_{i+m})$ de rang le plus bas du groupe (G2), tandis que la seconde (5 ... 13) est agencée de telle sorte qu'elle tient compte d'un report prédéterminé correspondant «1», caractérisée par le fait que les deux circuits logiques de report (4, 5) de chaque étage sont reliés par l'intermédiaire d'un circuit logique associé de sélection (15) à un demi-additionneur (3′) de l'étage respectif voisin de rang immédiatement supérieur $(ST_{i+m+1})$ et qu'à l'intérieur d'un groupe (G2), tous les circuits logiques de sélection (15 ... 18) associés à ce groupe peuvent être commandés par l'intermédiaire d'une ligne commune de sélection (16).

2. Unité de calcul numérique suivant la revendication 1, caractérisée par le fait que les circuits logiques de report situés dans les première et seconde voies de transmission de reports forment respectivement un report devant être envoyé à l'étage voisin de rang supérieur par l'intermédiaire de la voie considérée de transmission du report, chacun des circuits logiques de report situés dans la première ou la seconde voie de transmission du report formant le report en fonction du report qui leur est envoyé par l'intermédiaire de la première ou de la seconde voie de transmission du report, à partir de l'étage voisin de rang inférieur.

3. Unité de calcul numérique suivant l'une des revendications 1 ou 2, caractérisée par le fait que les deux circuits logiques de report (11, 13), qui sont prévus dans un étage $(ST_{i+2m-1})$ sont branchés en parallèle par l'intermédiaire de premières entrées et sont reliés respectivement aux sorties du report et de la somme (8″, 2″) du demi-additionneur (1″) et qu'ils sont raccordés, selon une association individuelle, par l'intermédiaire d'autres entrées aux deux voies (6″, 7″) de transmission des reports du groupe associé (G2).

4. Unité de calcul numérique suivant l'une des revendications 1 à 3, caractérisée par le fait que la ligne commune de sélection (16) d'un groupe (G2) est reliée à l'entrée, prévue pour le report, d'un demi-additionneur (3) de l'étage ($ST_{i+m}$) de rang le plus bas de ce groupe.

5. Unité de calcul numérique suivant l'une des revendications 1 à 4, caractérisée par le fait que tous les circuits logiques de sélection (15 ... 18) associés à un groupe relient, dans un premier état de commutation, uniquement les circuits logiques de report (4 ... 11) de la première voie de transfert du report aux demi-additionneurs des étages respectifs voisins de rang supérieur et relient, dans un second état de commutation, uniquement les circuits logiques de report (5 ... 13) de la seconde voie de transmission du report aux demi-additionneurs indiqués précédemment, le premier état de commutation existant lors de l'envoi d'un report «0» et le second état de commutation existant lors de l'envoi d'un report «1» à l'étage de rang le plus bas ($ST_{i+m}$) du groupe (G2).

6. Unité de calcul numérique suivant la revendication 5, caractérisée par le fait que le circuit logique de sélection (15″) contient un circuit ET (43), dont les entrées sont raccordées à la ligne de sélection (16) et à la seconde voie (7″) de transmission du report, et une porte NON-OU (42) située du côté sortie, dont les entrées sont reliées à la première voie (6″) de transmission du report et à la sortie du circuit ET (43).

7. Unité de calcul numérique suivant l'une des revendications précédentes, caractérisée par le fait qu'au moins un groupe, qui est formé par la réunion d'étages de rang supérieur, comporte un nombre plus élevé d'étages qu'un ou plusieurs groupes qui sont formés par la réunion d'étages de rang inférieur.

8. Unité de calcul numérique suivant l'une des revendications 1 à 7, caractérisée par le fait que pour l'exécution d'une soustraction A moins B entre deux nombres binaires A, B présents selon la représentation de complémentation à deux, les bits $A_i$ sont envoyés aux premières entrées deux premiers demi-additionneurs des différents étages ($ST_i$) et les bits $B_i$ sont envoyés en étant inversés aux secondes entrées des premiers demi-additionneurs, l'étage de rang le plus bas étant chargé par le report «1» présent côté entrée.

9. Unité de calcul numérique suivant l'une des revendications 1 à 7, caractérisée par le fait qu'un circuit OU-Exclusif est branché en amont d'entrées des premiers demi-additionneurs des différents étages ($ST_i$), auquel cas les premières entrées des circuits OU-Exclusif sont chargées respectivement par les bits d'un nombre binaire B, les autres entrées des premiers demi-additionneurs sont chargées par les bits d'un second nombre binaire A et les secondes entrées des circuits OU-Exclusif sont chargées, pour l'exécution d'une addition A et B, avec un «0» et, pour l'exécution d'une soustraction A moins B, par un «1».

0 130 397

# FIG 1

$A_{i+2m-1}$  $B_{i+2m-1}$　　　$A_{i+m}$  $B_{i+m}$　　　$A_{1+m-1}$  $B_{i+m-1}$　　　$A_i$  $B_i$  0,1

$x_{i+2m-1}$　　　$x_{i+m}$　　　$x_{i+m-1}$　　　$x_i$

8″ 1″　　　8 1　　　　　　　　

2″ 6″　　　2 9 "0"　　　　　　　"0"

12 11　　6　4　　　22　　21　25

18　　15″　15　　$E_{i+m}$

19　　　　　16　　20　　　　　　　$E_i$

$C_{aus}$　17″　17

13　　　　5　10　　24　　23　26

14　7″　7　Ü′　"1"　　　　　　　"1"

3″　3′　　3

$ST_{i+2m-1}$　　　$ST_{i+m}$　　$ST_{i+m-1}$　$ST_i$

G2　　　　　　　G1

$S_{i+2m-1}$　　　$S_{i+m}$　　　$S_{i+m-1}$　　　$S_i$

# FIG 2

# FIG 3